# EUROPÄISCHE PATENTANMELDUNG

(11) **EP 4 123 314 A1**
(43) Veröffentlichungstag der Anmeldung: **25.01.2023**
(21) Anmeldenummer: 21186969.8
(22) Anmeldetag: 21.07.2021
(51) Int. Cl.: G01Q 70/14, G01Q 70/16

(54) **VERFAHREN ZUR BEARBEITUNG EINER MESSSONDE ZUR ERFASSUNG VON OBERFLÄCHENEIGENSCHAFTEN ODER ZUR MODIFIKATION VON OBERFLÄCHENSTRUKTUREN IM SUB-MIKROMETERBEREICH SOWIE MESSSONDE**

(71) Anmelder: Helmholtz-Zentrum Berlin für Materialien und Energie GmbH, 14109 Berlin (DE); Max-Planck-Gesellschaft zur Förderung der Wissenschaften e.V., 80539 München (DE)
(72) Erfinder: KLEY, Christopher Seiji, 14195 Berlin (DE); MUNZ, Martin, 12161 Berlin (DE); ROLDÁN CUENYA, Beatriz, 14195 Berlin (DE)

(57) **Zusammenfassung**

Die Erfindung betrifft ein Verfahren zur Bearbeitung einer Messsonde, welche zur Erfassung von Oberflächeneigenschaften oder zur Modifikation von Oberflächenstrukturen im sub-Mikrometerbereich vorgesehen ist. Das Verfahren umfasst dabei mindestens die folgenden Schritte. Zunächst ein Bereitstellen eines Präkursors, welcher durch Licht- oder Elektronenstrahlen polymerisierbare Moleküle enthält und einer Messsonde, welche mindestens einen Träger mit Spitze mit einem oberen Ende, welche dem Träger gegenüberliegt, umfasst sowie einer Licht- oder Elektronenquelle zur Emittierung von Licht- oder Elektronenstrahlen mit einer Wellenlänge und Intensität, die einen mindestens erforderlichen Energieeintrag für eine Polymerisation des Präkursors erfüllen und von Mitteln zur veränderlichen Positionierung der Licht- oder Elektronenquelle und einer Steuerdatei und einer elektronischen Datenverarbeitungsanlage, wobei die Steuerdatei mindestens einen Teil der Oberfläche der Messsonde beschreibt und zur Steuerung einer Positionsänderung der Licht- oder Elektronenquelle dient. Im folgenden Schritt erfolgt die Bedeckung der Messsonde mit dem Präkursor und die Anordnung der Messsonde im Strahlengang der Licht- oder Elektronenstrahlen, woraufhin eine Belichtung des Präkursors- mit dem Licht- oder Elektronenstrahl an mehreren, in der Steuerdatei vorgegebenen, sich berührenden Positionen, unter Aussparung der Spitze der Messsonde erfolgt. Anschließend findet ein Entfernen der nicht belichteten Bereiche des Präkursors mittels Wasser- oder Lösungsmittelbad oder kontrolliertem Luft- oder Gasstrom statt sowie gegebenenfalls ein abschliessendes Entwickeln der durch Belichtung polymerisierten Bereiche. Des Weiteren sind von der Erfindung Messsonden umfasst, die mit dem erfindungsgemäßen Verfahren gefertigt sind.

## Beschreibung

Verfahren zur Bearbeitung einer Messsonde zur Erfassung von Oberflächeneigenschaften oder zur Modifikation von Oberflächenstrukturen im sub-Mikrometerbereich sowie Messsonde.

### Technisches Gebiet

Die Erfindung betrifft ein Verfahren zur Bearbeitung einer Messsonde zur Erfassung von Oberflächeneigenschaften oder Modifikation von Oberflächenstrukturen, insbesondere mit einer Auflösung im sub-Mikrometerbereich, wie dies z.B. in der Rastersondenmikroskopie gegeben ist sowie einer Messsonde nach dem erfindungsgemäßen Verfahren, welche z.B. zur Charakterisierung von elektrischen, chemischen, photo-elektrochemischen, und katalytischen Eigenschaften der Oberflächen kondensierter Materie oder deren lokaler Modifizierung, insbesondere an Oberflächen von Festkörpern dient.

### Stand der Technik

Messsonden der nach Anspruch 1 gattungsgemäßen Art werden zur Erfassung der Eigenschaften von Oberflächen, insbesondere im sub-Mikrometerbereich z.B. in der Rastersondenmikroskopie (scanning probe microscopy, SPM), welche u.a. die Rasterkraftmikroskopie (engl. atomic force microscopy, AFM), die Rastertunnelmikroskopie (engl. scanning tunneling microscopy, STM) oder aber auch die Elektrochemische Scan-Mikroskopie (SECM, engl.: scanning electrochemical microscopy) umfasst, eingesetzt. Sie bestehen zu einem überwiegenden Teil aus einem einseitig aufhängbaren Federbalken mit einer darauf angeordneten Spitze (engl. tip), die nahe dem freien Ende (d.h. gegenüber einer Aufhängung) des Federbalkens sitzt. Die sogenannte Spitze ist dabei aus einem überwiegend kegeligen oder pyramidalen Körper ausgebildet mit einer Höhe über einer Grundfläche, die mit einer Fläche des Federbalkens zusammenfällt und weist ein oberes Ende auf, welches der Anbringung auf dem Federbalken gegenüberliegt. Federbalken und Spitze können monolithisch gefertigt sein, d.h. einteilig oder sich aus mehreren Bauteilen zusammensetzen, üblicherweise aus zwei, nämlich genau dem Federbalken und der Spitze. Die Gesamtheit von Federbalken und Spitze wird auch als Cantilever, oder spezieller, AFM-Cantilever (dt.: AFM-Federbalken) bezeichnet. Die von der Erfindung umfassten Messonden können aber auch solche sein, die eine Spitze aufweisen, die nicht auf einem Federbalken angeordnet ist, sondern auf einem anderen Träger bzw. die Spitze aus dem Träger selbst herausgearbeitet ist.

Die Eigenschaften von Messsonden sowie ihre Modifikationen für spezielle Anwendungen sind entscheidend für die hoch-auflösende, hoch-empfindliche und quantitative Erfassung von Oberflächeneigenschaften wie dem Aufsatz 1 von I. W. Rangelow (Scanning proximity probes for nanoscience and nanofabrication, Microelectronic Engineering, Vol.83, 2006, 1449-1455) zu entnehmen ist. Die überwiegende Mehrzahl von Charakterisierungen der elektrischen Eigenschaften kondensierter Materie (Festkörper und Flüssigkeiten) mittels SPM werden an Luft oder im Vakuum durchgeführt, wie es in dem Aufsatz 2 von R.A. Oliver (Advances in AFM for the electrical characterization of semiconductors, Rep. Prog. Phys., Vol. 71, 2008, 076501 (37pp)) für die AFM-Methode beschrieben ist. Charakterisierungen der elektrischen, elektrochemischen und katalytischen Eigenschaften von Festkörper-Oberflächen in Flüssigkeiten als auch die photo-elektrischen, photo-elektrochemischen und photo-katalytischen Eigenschaften mittels AFM und STM sind dabei von besonderem Interesse für Anwendungen in der Biologie, Medizin oder Chemie. In dem Aufsatz 3 von P.L.T.M. Frederix et al. (Assessment of insulated conductive cantilevers for biology and electrochemistry, Nanotechnology, Vol. 16 (2005) 997-1005) sind Beispiele hierzu dargestellt. Letztere Anwendungbereiche stellen besondere Anforderungen an die Ausführung und die Herstellung von geeigneten Messsonden.

Neben der Charakterisierung von fest - flüssig Grenzflächen werden die Messonden, insbesondere Cantilever, auch für die Manipulation von Oberflächen, z.B. zur Mikro-/Nano-Lithographie eingesetzt. Mit den Spitzen der Cantilever werden beispielsweise einzelne Atome auf Oberflächen bewegt bzw. abgetragen, um so eine designierte Oberflächenstruktur zu schaffen. Dies kann rein mechanisch durch Kratzen (engl. scratching) oder Eindrücken (engl. indenting) bewirkt werden oder etwa durch das Anlegen einer elektrischen Spannung, sofern diese zu elektrochemischen Wechselwirkungen im Spitze-Probe Kontakt führt. Die Cantilever können zur Durchführung von Lithographieverfahren aber auch spezielle zusätzliche konstruktive Elemente, wie z.B. mikrofluidische Kanäle aufweisen, wie dies in dem Aufsatz 4 von A. Meister et al. (FluidFM: Combining atomic force microscopy and nanofluidics in a universal liquid delivery system for single cell applications and beyond, Nano Letters, Vol. 9, No. 6, 2009, 2501-2507) beschrieben ist.

Die Anwendung von AFM und STM zur Charakterisierung von elektrischen, chemischen, und/oder (photo-) elektrochemischen sowie (photo-) katalytischen Eigenschaften von Festkörperoberflächen, und dies auch in Flüssigkeiten, ist insbesondere in der Katalyse-, Batterie- und Photovoltaikforschung von Interesse. Für diesen Einsatz müssen die eingesetzten Messsonden mindestens an der Spitze elektrisch leitfähig sein und zur Abgreifung einer mit der Spitze zu detektierenden Spannung oder eines Stroms mit entsprechenden Mitteln zur Spannungs-/Stromleitung ausgerüstet sein. Im einfachsten Fall ist der gesamte Cantilever, also einschließlich Spitze und Federbalken, leitfähig, durch die Verwendung entsprechender Materialien, ausgestaltet. Um das Auftreten von Leckströmen zu minimieren oder gar zu eliminieren und damit die Ortsauflösung der leitfähigen Spitzen zu verbessern aber auch die Messempfindlichkeit und - genauigkeit zu erhöhen, werden diese im Bereich der Spitze bis auf deren letztes, oberes Ende elektrisch isoliert. Für die Herstellung derartiger Messsonden mit elektrischer Isolierung sind im Stand der Technik einige Verfahren vorgeschlagen.

In dem Aufsatz 5 von C. Kranz et al. (Integrating an ultramicroelectrode in an AFM cantilever: Combined technology for enhanced information, Analytical Chemistry, Vol. 73, No. 11, 2001, 2491-2500) ist ein Verfahren vorgestellt, in dem eine Messsonde in Form eines Cantilevers (Federbalken und Spitze) aus Siliziumnitrid zunächst mit Chrom durch RF-Sputterdeposition beschichtet wird und anschließend mit Gold. Diese leitfähige Beschichtung wird dann anschließend mit einer elektrisch isolierenden Beschichtung aus Siliziumnitrid versehen, die mit plasmaunterstützter chemischer Gasphasenabscheidung (engl.: plasma-enhanced chemical vapour deposition, PECVD) aufgebracht wird. Alle drei Beschichtungen werden dabei auch an der Spitze des Cantilever aufgetragen. Um die elektrische Leitfähigkeit an der Spitze der Cantilever einzustellen, wird diese in mehreren Schritten mit einem fokussierten lonenstrahl (engl.: focused ion beam, FIB) nachträglich beschnitten. Eine detaillierte Beschreibung dieses Herstellungsverfahrens für Cantilever ist auch in der EP 1 290 431 B1 offenbart.

In dem Aufsatz 6 von I. V. Pobelov et al. (Electrochemical current-sensing atomic force microscopy in conductive solutions, Nanotechnology, Vol. 24, 2013, 115501 1-10) ist ein ähnlicher Ansatz offenbart, in dem ein handelsüblicher Cantilever zunächst mit einer Ti/Au/Ti - Schichtfolge versehen wird (Sputterdeposition) und dann mit einer Schicht aus Siliziumnitrid, gefolgt von einer abschließenden Schicht aus Chrom (per PECVD). Auch hier wird die Spitze mitbeschichtet und anschließend mit fokussiertem lonenstrahl und letztlich mit Nassätzen freigelegt.

In der US 2020/124636 A1 wird ein Cantilever für Messung in Flüssigkeiten beschrieben, der zwei Besonderheiten umfasst. Erstens ist der den Cantilever tragende Chip gebildet, welcher für einen elektrischen Anschluss mit einem Flachbandkabel verbunden ist. Das Flachbandkabel ist auch als Griff für die Handhabung des Cantilevers auszugestalten. Zweitens wird eine isolierende Beschichtung des Cantilevers inklusive der Spitze mit dem Polymer Parylene C mittels des Gorham Prozesses beschrieben. Beim Gorham-Prozess wird ein Ausgangs-Dimer zunächst durch eine Pyrolyse-Kammer geleitet, in der es in Monomere zerfällt, welche dann auf ein gekühltes Substrat treffen, an dessen Oberfläche die Polymerisation auftritt. Der Prozess findet im Vakuum statt und betrifft immer das gesamte, zu beschichtende Objekt. Wie wohl in der Patentschrift US 2020/124636 A1 nicht ausgeführt, ist somit das obere Ende der Spitze des Cantilevers nach dem Prozess ebenfalls beschichtet und muss zur Ermöglichung eines elektrisch leitfähigen Kontaktes zwischen Spitzenapex und Probenoberfläche von der Beschichtung nachträglich mit abtragenden Verfahren (z.B. Laserablation oder lonenstrahlschneiden) befreit werden. Der Gorham-Prozess ist in dem Aufsatz 7 von B. J. Kim und E. Meng (Micromachining of Parylene C for bioMEMS, Polymer Advanced Technologies, Vol. 27, 2016, S. 564-576) im Detail beschrieben.

Eine Alternative bilden Messsonden, die wie in dem Aufsatz 8 von K. Yum et al. (Individidual Nanotube-Based Needle Nanoprobes for Electrochemical Studies in Picoliter Microenvironments, ACS Nano, Vol. 1(5), 2007, S. 440-448) hergestellt werden. Hier wird ein spitzer Metalldraht mit einem Nanoröhrchen an der Spitze versehen. Beides wird anschließend mit Gold beschichtet (Sputterdeposition) und dann mit einer elektrisch isolierenden Schicht von Polymeren per Elektropolymerisation beschichtet. Die Spitze wird auch hier zuletzt mit fokussiertem lonenstrahl-Schneiden freigelegt.

Den aus dem Stand der Technik bekannten Herstellungsverfahren für Messsonden für die Charakterisierung von elektrischen und/oder elektrochemischen Eigenschaften von Oberflächen von Festkörpern oder Flüssigkeiten oder zur Manipulation von Oberflächen, wie z.B. in der Lithographie, gemein ist ein aus mehreren Schritten bestehender Beschichtungsprozess mit anschließendem Freilegen der Spitze der Messsonde durch invasive Verfahren. Dabei geht der Prozess des Freilegens der Spitze mit einem hohen Risiko einer Qualitätseinbuße oder sogar der Gefahr des Verlustes des Spitzenapex des Cantilevers einher.

### Aufgabenstellung

Die Aufgabe der vorliegenden Erfindung ist es, ein Verfahren zur Bearbeitung einer Messsonde zur Erfassung von Oberflächeneigenschaften oder Modifikation von Oberflächenstrukturen im sub-Mikrometerbereich anzugeben, als Alternative zu den aus dem Stand der Technik bekannten Verfahren, das schonender gegenüber einer Spitze der Messsonde durchzuführen ist und dabei auch vereinfacht sowie eine differenzierte Funktionalisierung ermöglicht. Weiterhin ist es die Aufgabe der Erfindung, eine Messsonde anzugeben, die vereinfacht herstellbar ist.

Die Aufgabe wird durch die Merkmale der Ansprüche 1 und 10 gelöst. Vorteilhafte Ausgestaltungen sind Gegenstand der Unteransprüche.

Das erfindungsgemäße Verfahren zur Bearbeitung einer Messsonde zur Erfassung von Oberflächeneigenschaften oder Modifikation von Oberflächenstrukturen im sub-Mikrometerbereich weist mindestens die folgenden Schritte auf.

In einem ersten Schritt werden die für die Durchführung des Verfahrens benötigten Mittel, Präkursoren und auch die zu bearbeitende Messsonde bereitgestellt. Die Reihenfolge der Bereitstellung ist dabei nicht wesentlich für die Durchführung des Verfahrens, d.h. beliebig.

Im Einzelnen wird mindestens folgendes bereitgestellt.

Es wird eine Messsonde bereitgestellt, welche mindestens eine Spitze und einen Träger umfasst, wobei die Spitze ein oberes Ende aufweist, welches dem Träger gegenüberliegt. Die Messsonde ist dabei geeignet, zur Erfassung von Oberflächeneigenschaften oder Modifikation von Oberflächenstrukturen im sub-Mikrometerbereich eingesetzt zu werden. Die hierzu benötigte Ausgestaltung ist dem Fachmann hinreichend bekannt und z.B. den in dieser Schrift genannten Aufsätzen 1 - 10 und 12 zu entnehmen.

In einer ersten Ausführungsform des erfindungsgemäßen Verfahrens ist die bereitgestellte Messsonde ein sogenannter Cantilever, d.h. sie besteht aus einer Spitze und einem Federbalken als Träger, die monolithisch gefertigt sein können oder aus mehreren Teilen zusammengesetzt.

Der Cantilever kann dabei ein beliebiger Cantilever für den Einsatz in der Rastersondenmikroskopie oder für Lithographiesysteme sein. Die Cantilever sind dabei üblicherweise in einer Größenordnung zwischen 10 µm und 900 µm lang, in der längsten Erstreckung entlang des Federbalkens. Cantilever, die für den Einsatz in dem erfindungsgemäßen Verfahren geeignet sind, können dabei kommerziell erworben werden oder durch geeignete Herstellungsverfahren der MEMS-Technologie und Mikrofabrikationstechnik, wie z.B. Photo- oder Elektronenstrahl-Lithographie und anisotropes chemisches Ätzen von Silizium-Wafern, gefertigt werden.

Entsprechend einer zweiten Ausführungsform ist der bereitgestellte Cantilever ausgebildet, um Strom oder Spannungen an Oberflächen oder in Flüssigkeiten zu detektieren und so elektrische, chemische, oder (photo-) elektrochemische und (photo-) katalytische Eigenschaften an Oberflächen zu erfassen. In dieser Ausführungsform ist mindestens die Spitze und dies mindestens teilweise und mindestens an deren oberen Ende aus einem leitfähigen Material gebildet. Der an der Spitze anliegende Strom oder eine anliegende Spannung müssen zudem mit dem Cantilever abgreifbar sein, d.h. es müssen Mittel zur Strom-/Spannungsleitung vorgesehen sein, wie z.B. Leiterbahnen oder Kabel. Im einfachsten Fall ist der gesamte Cantilever, Spitze und Federbalken, aus leitfähigem Material gebildet.

Das Material, aus dem die elektrisch leitfähige Komponente des Cantilevers der ersten Ausführungsform gefertigt ist, weist dabei höchstens einen spezifischen Widerstand in der Grössenordnung von 10² Ohm·cm auf. Materialien, die dieser Eigenschaft genügen und in vorteilhafter Weise für die Fertigung von Cantilevern zum Einsatz kommen, sind solche aus der Gruppe dotiertes Silizium, Aluminium, Gold, Platin, Silber oder dotiertem Diamant, wie es einer weiteren Ausführungsform entspricht. Alternativ kann ein Cantilever aus nicht- oder schwach leitfähigem Material mit einer elektrisch leitfähigen Beschichtung versehen werden, etwa aus dotiertem Diamant, Metallen (wie Aluminium, Gold, Iridium, Platin, Silber oder Wolfram), sowie ihren Legierungen oder Metall-Verbindungen wie Titannitrid (TiN) oder Wolframcarbid (WC / W₂C), wie es auch einer Ausführungsform entspricht.

In einer zweiten Ausführungsform des erfindungsgemäßen Verfahrens ist die bereitgestellte Messsonde gebildet aus einer Spitze und einem Träger, wobei die Spitze aus einem Draht gebildet ist und der Träger aus einer, den Draht umfassenden, mikrometerskaligen Plattform. Die Plattform kann ring- oder scheibchenförmig ausgestaltet sein, so dass die Längsachse des Drahtes senkrecht ist zur Ebene der Plattform. Die Plattform ist aus einem elektrisch isolierenden Material gefertigt und (photo-) elektrochemisch inert. Im Bereich zwischen der Plattform und dem Ende des Drahtes, das dem spitzen Ende gegenüberliegt, kann die elektrische Isolation über ein klassisches Verfahren hergestellt werden, wie etwa durch teilweises Eintauchen in eine Lösung mit geeigneten Polymermolekülen. Um eine mikrometerskalige Plattform bereitzustellen, könnte alternativ zu einer auf den Draht aufgesetzten Scheibe auch eine Art Sockel erzeugt werden, durch kontrolliertes Fräsen in die Drahtoberfläche, etwa per lonenstrahl (focused ion beam (FIB) milling) oder chemisches Ätzen.

Es wird des Weiteren ein Präkursor bereitgestellt, welcher als Präkursor mindestens durch Licht- oder Elektronenstrahlen polymerisierbare Moleküle als Ausgangsprodukt enthält.

Dieser Präkursor ist photo-polymerisierbar im Falle, dass er durch Lichtstrahlen polymerisierbar ist. Durch Einstrahlung elektromagnetischer Strahlung unterliegt ein derartiger Präkursor einer physikochemischen Umwandlung, die eine Erhöhung des Vernetzungsgrades bedeutet bzw. des Grades der Polymerisation. Eine derartige Präkursor-Mischung enthält neben den polymerisierbaren Molekülen auch Photoinitiatoren und Füllstoffe. Zur Aktivierung der physikochemischen Vorgänge ist eine Photonenenergie bzw. Wellenlänge und Intensität Voraussetzung, die durch die polymerisierenden Moleküle oder die Photoinitiatoren bestimmt sind, in dem sie über einem sogenannten Belichtungsschwellenwert der Präkursor-Mischung liegt. Die zugrunde liegenden physikochemischen Mechanismen und Materialanforderungen sowie benötigte Photoinitiatoren, Füllstoffe u.a. sind komplex und vielfältig und z.B. in dem Aufsatz 9 von J. V. Crivello und E. Reichmanis (Photopolymer materials and processes for advanced technologies, Chemistry of Materials, Vol. 26, 2014, 533-548) im Detail erklärt und beschrieben. Es wird im Folgenden bei der Nennung von Präkursor-Mischungen nicht für jeden Fall explizit angegeben, welche Zusätze, insbesondere Photoinitiatoren für die Polymerisation benötigt werden und welche dies sein könnten. Neben der Hauptmatrix und den Photoinitiatoren kann die Präkursor-Formulierung auch reaktive Verdünner und vernetzungsaktive Zusätze enthalten, wie z.B. in dem Aufsatz 10 von X. Zhang et al. (Acrylate-based photosensitive resin for stereolithographic three-dimensional printing, J. Appl. Polym. Sci. 2019, 47487) dargestellt. Der Fachmann wird hier auf eine Konsultation des Standes der Technik verwiesen.

Der Präkursor kann auch durch Moleküle gegeben sein, die durch den Energieeintrag eines Elektronenstrahls polymerisieren. Die Polymerisation wird hier durch die Einwirkung von Initiatoren, die durch die ionisierende Strahlung entstehen, ausgelöst. Bei den Initiatoren handelt es sich durch Elektronenstrahlen erzeugte freie Radikale und Radikal-Ionen, wobei auch die Bildung von lonenpaaren von Bedeutung ist. Es können auch leicht zerfallende Zusatzstoffe zugesetzt werden, um die Reaktion zu unterstützen, ähnlich der Intitiatoren im Falle der Polymerisation durch elektromagnetische Strahlung. Dies ist aber aufgrund der ionisierenden Wirkung von Elektronenstrahlen und der damit verbundenen Erzeugung von freien Radikalen jedoch zumeist unnötig.

Die Beschichtung der Messsonde mit dem Präkursor, in einem nächsten Schritt des Verfahrens, ist durch Eintauchen in oder Bedecken mit flüssige(n) Formulierungen des Präkursors bzw. einer Präkursor-Mischung oder Besprühen, Bestäuben, Bedrucken (Tintendruck) oder sonstige geeignete Verfahren vorzunehmen. Die Beschichtung ist dabei möglicherweise erst nach der Positionierung der Messsonde (weiterer Schritt) durchzuführen. Die bereitgestellte Messsonde wird dabei mindestens teilweise mit der Präkursor-Mischung beschichtet.

Die Auswahl geeigneter Präkursoren für eine bestimmte Anwendung hängt von möglicher Weise speziellen Anforderungen an die damit beschichteten Messsonden ab. Für eine Ausführungsform des Verfahrens sind in vorteilhafter Weise Präkursor-Mischungen auszuwählen, die nach Polymerisation elektrisch isolierend sind. Die elektrische Isolation ist für die Isolation der Spitze, außer an deren oberen Ende, erforderlich, um elektrische Leckströme zu minimieren oder gar zu eliminieren und somit die Ortsauflösung bei einer Charakterisierung von Oberflächen zu verbessern aber auch die Messempfindlichkeit sowie -genauigkeit zu erhöhen. Als elektrisch isolierend im Sinne der Erfindung sind alle Materialien anzusehen, die einen spezifischen Widerstand von 10⁸ Ω·cm oder höher aufweisen. Weitere Kriterien für die Auswahl geeigneter Präkursoren oder Präkursor-Mischungen sind das Schrumpfverhalten im Verlaufe der Polymerisation oder Vernetzungsreaktion und die strukturelle Stabilität des resultierenden Polymers als Funktion der Umgebungsbedingungen, wie Temperatur und umgebendes Medium und hier insbesondere auch gegenüber einem weiten pH-Bereich.

Der Erfindung ebenfalls zugänglich ist die zusätzliche Verwendung von Präkursoren für einen photoinduzierten Massentransport, wie dieses z.B. in dem Aufsatz 11b von Z. Sekkat und S. Kawata (siehe unten) beschrieben ist.

Die Beschichtung der Messsonde mit dem Präkursor wird mindestens mit einer Schichtdicke ausgeführt, die eine Schichtdicke eines durch die Polymerisation gebildeten Polymers von mindestens 10 nm gewährleistet.

Für eine nächste Ausführungsform enthält die Präkursor-Mischung als photopolymerisierbares Harz in vorteilhafter Weise eines, welches ausgewählt ist aus der Gruppe, die folgende Verbindungsklassen umfasst:
Acrylate, Epoxidharze, Fluorocarbone, Phenolharze, Amide, Ester, Imide, Styrol, (Poly-)Sulfide, Urethane, Vinyle, Silicone, Xylylene (incl. Parylene), UV-härtbare Dimethylsiloxane und Carbamate/Methacrylate basierte Verbindungen. Bei den Acrylaten sind insbesondere multifunktionale AcrylatMonomere zu erwähnen, wie z.B. "Pentaerythritol tetraacrylate" und "Pentaerythritol triacrylate". Als Beispiel für ein Epoxidharz ist ein Bis-Phenol-A-Novolak mit einer Gruppenfunktionalität von 8 zu nennen.

In Abhängigkeit der vorgesehenen Anwendung der Messsonden kann statt einem elektrisch isolierenden Polymer als Produkt der Polymerisation für die Beschichtung der Messsonden auch eine Präkursor-Mischung (aus einer oder mehreren molekularen Komponenten und möglicherweise auch nano- oder mikro-skaligen Füllstoffen) gewählt werden, in der durch Additive dem Produkt eine der Eigenschaften elektrische Leitfähigkeit, magnetische Suszeptibilität, hohe mechanische Stabilität oder Steifigkeit, hohe thermische Stabilität oder optische Eigenschaften wie Transparenz und Reflektivität und katalytische Aktivität verliehen werden, wie es einer Ausführungsform entspricht. Erfolgt die Beschichtung der Messsonde durch eine derart ausgezeichnete Präkursor-Mischung zudem an ausgewählten Orten, ist hierdurch im Polymerisationsschritt des Verfahrens z.B. die Ausbildung von Leiterbahnen und Ähnlichem zu ermöglichen.

Die Polymerisation des Präkursors erfolgt durch Licht- oder Elektronenstrahlen, welche von einer Licht- oder Elektronstrahlenquelle emittiert werden, die bereitzustellen ist.

Licht im Sinne der Erfindung ist elektromagnetische Strahlung in einem Wellenlängenbereich vom UV-Bereich bis in den IR-Bereich, das entspricht 100 nm bis 10 µm. Für die Photopolymerisation werden insbesondere Laser verwendet wie z.B. Titan-Saphir-Femtosekunden-Laser mit einer Wellenlänge von 800 nm. In dem Aufsatz 11a von N. Tsutsumi et al. (Influence of baking conditions on 3D microstructures by direct laser writing in negative photoresist SU-8 via two-photon polymerization, Journal of Laser Applications, Vol. 29, 2017, 042010) und 11b von Z. Sekkat und S. Kawata (Laser nanofabrication in photoresists and azopolymers, Laser & Photonics Review, Vol. 8(1), 2014, S. 1-26) sind detaillierte und umfassende Informationen über mögliche einsetzbare Lichtquellen bzw. Laser angegeben.

Zur Photopolymerisation eines entsprechenden Präkursors-, der mindestens ein photopolymerisierbares Harz umfasst, wird eine Lichtquelle bereitgestellt, die eine Photonenenergie (Wellenlänge) und Lichtintensität (Fluenz) aufweist, die ausreichend ist für eine Photopolymerisation der lichtempfindlichen Moleküle des gewählten Präkursors oder des in einer Präkursor-Mischung vorliegenden Photoinitiators. Mittel zur Leitung (Ausrichtung auf die zu bearbeitende Messsonde) und Formung (Strahlquerschnitt, Intensität u.a.) von Lichtstrahlen der Lichtquelle wie z.B. Linsen, Linsensysteme, Spiegel, Chopper, Filter u.a. sind zu der Bereitstellung der Lichtquelle zugehörig.

Die Lichtquelle kann z.B. durch einen Laser oder eine Leuchtdiode gegeben sein. In vorteilhafter Weise ist die Lichtquelle ein Laser, wie auch weiter oben ausgeführt.

Zur Polymerisation eines entsprechenden Präkursors durch Elektronenstrahl ist eine Elektronenquelle bereitzustellen, wie sie etwa in einem Elektronenmikroskop verfügbar ist, das eine Beschleunigungsspannung von 200 kV oder höher zulässt.

Um die Polymerisation des Präkursors oder einer Präkursor-Mischung an mehr als nur einem Ort durchzuführen und so einen mindestens in zwei Dimensionen ausgedehnten und zusammenhängenden Bereich des polymerisierten Produktes herzustellen, sind die Messsonde und der Licht-oder Elektronenstrahl in Bezug aufeinander zu translatieren (verschieben) und gegebenenfalls auch zu schwenken (rotieren um einen Schwerpunkt in der Messsonde). In den ganz überwiegenden Fällen wird dies durch eine Bewegung des Licht- oder Elektronenstrahls bewirkt, welcher mit Mitteln zur veränderlichen Positionierung der Licht- oder Elektronenquelle erfolgt, die bereitzustellen sind. Die veränderliche Positionierung erfolgt in Form einer Translation und/oder Verschwenkung der Licht- oder Elektronenstrahlen bzw. der Quellen. Die Mittel zur veränderlichen Positionierung bestehen in vorteilhafter Weise aus Motoren oder Aktuatoren, die Schritte im Mikro- und Nanobereich ausführen können. Die kleinste Schrittgröße bestimmt hier die mögliche Auflösung bzw. Feinheit für Details hergestellter zwei- oder dreidimensionaler Formen. Wiewohl die Verschiebung oder Verschwenkung eines hierfür bereitzustellenden Probentisches, auf dem die Messsonde anzuordnen ist, aufwendiger ist, ist dieses, mit den gleichen Mitteln wie denen zur Verschiebung/Schwenkung des Licht- oder Elektronenstrahls auch möglich, sofern dies kein Abfließen der flüssigen Präkursor-Mischung verursacht, um eine Bearbeitung in zwei- oder drei Dimensionen (2D oder 3D) zu gewährleisten. Wesentlich ist, dass die Lage des Licht- oder Elektronenstrahls in Bezug auf die Messsonde veränderbar ist.

Die zu bearbeitende Messsonde ist in einem zweiten Schritt im Strahlengang eines von der Licht- oder Elektronenquelle ausgesendeten Licht- oder Elektronenstrahls anzuordnen. Beim spitzenseitigen Bedrucken der Messsonde weist dabei deren Spitze in Richtung des einfallenden Strahls. Die Anordnung ist gegebenenfalls zusätzlich unter einer bestimmten Lage in Bezug auf einen Fokus des Licht- oder Elektronenstrahls vorzunehmen. Letztere ist insbesondere bei der Verwendung eines Lasers als Lichtquelle von Bedeutung. Durch die Lage des Fokus ist die Tiefe, in der die Polymerisierung in einer Schicht aus Präkursor-Molekülen erfolgt, zu beeinflussen, was für die Strukturierung des Polymers als Produkt der Polymerisierung nutzbar ist.

In einem dritten Schritt wird eine Steuerdatei und eine elektronische Datenverarbeitungsanlage, auf der die Steuerdatei zur Steuerung von Translation und Verschwenkung eines auf eine Messsonde einfallenden Strahls sowie gegebenenfalls eine Lageveränderung eines Fokus, bereitgestellt. In der Steuerdatei ist hierzu mindestens ein Teil der Oberfläche der Messsonde erfasst, so dass diese als digitales Modell mit absoluten Positionen in der Steuerdatei als elektronische Datei vorliegt. Die Steuerdatei dient der Verschiebung und eventuell auch Verschwenkung der Messsonde gegenüber dem einfallenden Licht- oder Elektronenstrahl bzw. umgekehrt, in dem diese als Grundlage einer Computersteuerung von Mitteln zur Translation und Verschwenkung dient. Steuerdateien sind mithilfe optischer oder etwa elektronenmikroskopischer Abbildung des realen Objekts, hier der Messsonde, zu erstellen. Gegebenenfalls ist hierfür zusätzlich zu einem für eine Photopolymerisation vorgesehenen Lasers ein weiteres optisches Abbildungssystem oder etwa ein externes elektronenmikroskopisches Abbildungssystem zur Verfügung zu stellen. Bei einem, in Bezug auf die Ausformung der Messsonde und deren Positionierung standardisierten Verfahren, ist eine einmalig vorab gewonnene Steuerdatei wieder zu verwenden, so dass der dritte Schritt auch vor den beiden vorausgegangenen liegen kann und lediglich die Steuerdatei selber bereitzustellen ist.

In dem folgenden Schritt wird der auf der Messsonde aufgebrachte Präkursor, der auch in einer Präkursor-Mischung vorliegen kann, an mehreren, sich berührenden Positionen belichtet. Die sich berührenden Positionen ergeben sich aus der Größe des Brennflecks (Fokus) des Licht- oder Elektronenstrahls und dem daraus resultierenden polymerisierten Bereich, in dem die Translation oder Schwenkung nur um einen solchen Betrag erfolgt bzw. die Brennflecke so positioniert sind, dass sich die polymerisierten Bereiche berühren, so dass sich ein zusammenhängendes polymerisiertes 2D oder 3D Gebiet ergibt. Mittels der Steuerung durch die elektronische Datenverarbeitungsanlage, d.h. auf Basis der Steuerdatei, wird der Präkursor entlang eines bestimmten Pfads belichtet, um die Polymerbeschichtung lagenweise aufzubauen (Slicing). Dabei wird im Allgemeinen jede Lage wiederum aus Linien zusammengesetzt (Hatching). Die Festlegung der Trajektorie erfolgt mittels einer Steuersoftware auf der elektronischen Datenverarbeitungsanlage, in die zuvor die Steuerdatei eingelesen wurde. Das erfindungsgemäße Verfahren ist als ortsselektives Verfahren anzusprechen, in dem nur ausgewählte Bereiche eines bereitgestellten Volumens des Präkursors belichtet werden, je nach vorbestimmter gewünschter Ausformung des Produktes.

Ein weiterer Parameter, der durch die Steuerdatei vorzugeben ist, ist die Lage des Fokus des Licht- oder Elektronenstrahls in Bezug auf die Oberfläche der Messsonde. Durch Verschiebung des Fokus von der Oberfläche weg, kann eine Polymerisation der Präkursoren so erfolgen, dass sich zwischen dem polymerisierten Produkt (Polymer) und der Oberfläche der Messsonde oder in dem Polymer selbst Hohlräume bilden, wie es auch einer Ausführungsform entspricht, welche z.B. als Mikrofluidkanäle zu nutzen sind. Auch die Oberfläche des polymerisierten Produktes (Polymer) ist so strukturierbar.

Die Beschichtung der Messsonde in Form eines Cantilevers, wie es einer Ausführungsform entspricht, erfolgt erfindungsgemäß auf mindestens einem Teil des Trägers, der im Falle eines Cantilevers durch den Federbalken gegeben ist, der durch die Seite, auf der die Spitze auf dem Träger angeordnet ist, gegeben ist. Dabei muss nicht die ganze Seite des Trägers bzw. Cantilevers beschichtet werden. Es kann jedoch die gesamte Oberfläche des Trägers bzw. Cantilevers isolierend beschichtet werden, also auch die Seitenflächen und die gegenüberliegende Oberfläche. Die Polymerisation erfolgt immer unter Aussparung des oberen Endes der Spitze. Die Beschichtung erfolgt dabei jedoch auch auf einem Teil der Seiten-/Mantelfläche(n) der Spitze. Der ausgesparte Teil der Spitze beträgt dabei mindestens 5 Nanometer in der vertikalen Erstreckung der Spitze (Höhe) und höchstens 1 Mikrometer. In besonders vorteilhafter Weise ist die rund um das oberste Ende der Spitze ausgesparte Fläche ≤7 µm², unter der Annahme, dass der Apex der Spitze näherungsweise durch die Oberfläche einer Halbkugel beschrieben werden kann.

Die Belichtung des Präkursors bzw. der Präkursor-Mischung ist insbesondere, wie es einer Ausführungsform entspricht, als Zwei-Photonen-Polymerisation ausgeführt, in dem diese auf der sogenannten Zwei-Photonen-Absorption beruht. Hier erfolgt simultan die Absorption zweier Photonen durch ein Molekül oder ein Atom, das dabei in einen energetisch angeregten Zustand übergeht. Mit der Zwei-Photonen-Polymerisation (engl. two-photonpolymerisation, auch als 2PP abgekürzt) lassen sich höhere Auflösungen erzielen, insbesondere auch in der Tiefe, d.h. entlang der Bestrahlungsrichtung. In dem Aufsatz 12 von S. Maruo and S. Kawata (Two-photon-absorbed photopolymerization for three-dimensional microfabrication, Proceedings IEEE The Tenth Annual International Workshop on Micro Electro Mechanical Systems. An Investigation of Micro Structures, Sensors, Actuators, Machines and Robots, 1997, S. 169-174) ist die Zwei-Photonen-Polymerisation näher erläutert. Die Zwei-Photonen-Polymerisation wird mit einem Laser als Lichtquelle ausgeführt.

Die belichteten Bereiche können dabei auch durch weitere Entwickelungsschritte, wie z.B. durch eine thermische Behandlung finalisiert werden. Dies dient z.B. der Erhöhung des Vernetzungsgrades oder einer Verbesserung der mechanischen oder anderen physikalischen Eigenschaften.

Nach dem Belichtungsschritt werden die nicht belichteten Bereiche des Präkursors bzw. der Präkursor-Mischung in einem weiteren Schritt entfernt. Letzteres geschieht auf schonende Weise durch Waschung mit oder durch Eintauchen in Wasser oder einem geeigneten Lösungsmittel. Auch eine Abtragung durch einen Strom von Luft oder einem inerten Gas kann je nach Präkursor hierzu genutzt werden. Weiterhin kann gegebenenfalls auch eine Entwicklung der belichteten Bereiche erfolgen, etwa durch Eintauchen der Messsonde in eine geeignete Entwicklerlösung.

Durch das erfindungsgemäße Verfahren ist gemäß Anspruch 10 eine erfindungsgemäße Messsonde zur Erfassung von Oberflächeneigenschaften oder zur Modifikation von Oberflächenstrukturen im sub-Mikrometerbereich, gegeben, welche mindestens einen Träger und eine darauf angeordnete Spitze umfasst. Träger und Spitze können monolithisch oder aus Bauteilen aufgebaut vorliegen.

Die Messsonde ist dadurch gekennzeichnet, dass diese mindestens teilweise und unter Aussparung eines oberen, dem Träger gegenüberliegenden Teils der Spitze, mit einem durch Licht- oder Elektronenstrahl polymerisierten Polymer beschichtet ist. Die Schichtdicke beträgt mindestens 10 nm. In vorteilhafter Weise ist das Polymer elektrisch isolierend (d.h. mit einem spezifischen Widerstand von 10⁸ Ω·cm oder höher), so dass eine Verwendung der Messsonde zur Erfassung von elektrischen Eigenschaften von Oberflächen oder Flüssigkeiten gegeben ist. Die Aussparung der Spitze erfolgt an deren oberem Ende, welches dem Träger gegenüberliegt. Dabei umfasst die Aussparung im oberen Spitzenbereich insbesondere einen Bereich in der Fläche, der kleiner als 7 µm² ist.

In einer speziellen Ausführungsform liegt die Messsonde als Cantilever vor, welcher mit Mitteln zum Abgreifen von Strom oder Spannung mit einer Leiterbahn versehen ist, deren Breite kleiner ist als die Gesamtbreite des Cantilevers.

Hierbei kann die Leiterbahn wahlweise vollständig auf der Spitzen-Seite des Cantilevers verlaufen oder teilweise entlang der gegenüberliegenden Seite (die als Rückseite anzusprechen ist) des Cantilevers, die im Allgemeinen als Reflektionsfläche für einen Laserstrahl der optischen Komponente z.B. eines in der Rasterkraftmikroskopie verwendeten Detektionssystems dient, oder einer der Kantenflächen, die die Spitzen-Seite des Cantilevers mit seiner Rückseite verbindet.

Insbesondere kann es vorteilhaft sein, die Rückseite, die als Reflektionsfläche in der Anwendung des Cantilevers dient, unbeschichtet vorzusehen, um eine Reduktion der optischen Reflektivität zu vermeiden. Im Allgemeinen wird die Reflektionsfläche nahe dem freien Ende des Cantilevers angeordnet, um eine hohe Detektionsempfindlichkeit für Auslenkungen der Spitze aus ihrer Ruheposition im Einsatz zu gewährleisten.

In einer weiteren speziellen Ausführungsform der erfindungsgemäßen Messsonde, ist lediglich die spitzenseitige Oberfläche eines Cantilevers als Messsonde beschichtet, unter Aussparung des oberen Endes der Spitze, während Kantenflächen des Cantilevers unbeschichtet bleiben und so z.B. für die Ausstattung mit Leiterbahnen zur Verfügung stehen.

Eine weitere Ausführungsform umfasst eine spezielle Ausführung einer erfindungsgemäßen Messsonde, in der ein Cantilever einen ihn tragenden Chip umfasst, welcher teilweise mit dem durch Licht- oder Elektronenstrahlen polymerisierten Polymer beschichtet ist, wobei die Beschichtung nicht auf der Fläche, die für elektrische Kontaktierung mit einem Kabel, einer Klemme oder Leiterbahn, das/die eine Verbindung zu einem elektrischen Schaltkreis oder einer Spannungsquelle herstellt, vorliegt.

In einer nächsten Ausführungsform der erfindungsgemäßen Messsonde, ist diese mit Leiterbahnen versehen, welche aus einem elektrisch leitfähigen Polymer gebildet sind und wobei das leitfähige Polymer aus einem durch Licht- oder Elektronenstrahlen polymerisierten Präkursor gebildet ist. Das Polymer ist dabei durch Additive, die aus einer Präkursor-Mischung resultieren, elektrisch leitfähig ausgebildet. Eine derartig ausgebildete Messsonde ist wiederum auch in dem erfindungsgemäßen Verfahren zur Bearbeitung bereitzustellen.

Durch das erfindungsgemäße Verfahren kann auch eine Messsonde gebildet werden, deren spitzenseitige Oberfläche zunächst komplett, inklusive der Spitze, mit einem elektrisch leitfähigen Polymer beschichtet ist, welches dann wiederum gemäß dem erfindungsgemäßen Verfahren mit einem Polymer unter Aussparung der Spitze beschichtet ist.

Die erfindungsgemäße Messsonde kann durch eine Messsonde gegeben sein, in der die Spitze aus einem Draht gebildet ist und der Träger aus einer, den Draht umfassenden Scheibe. Der Draht ist dabei in vorteilhafter Weise zylinderförmig oder konisch und an einem oberen Ende mit einer scharfen Spitze, welche dem Abtasten einer Probenoberfläche dient, versehen. Die Beschichtung mit einem elektrisch isolierenden Polymer gemäß dem erfindungsgemäßen Verfahren liegt im Bereich zwischen der Plattform und dem oberen Ende der Spitze vor, unter Ausschluss derselben. Die Plattform kann etwa ring- oder scheibchenförmig ausgestaltet sein, so dass die Längsachse des Drahtes senkrecht ist zur Plattform. Die Plattform sollte aus einem elektrisch isolierenden Material gefertigt und elektrochemisch inert sein. Im Bereich zwischen der Plattform und dem Ende des Drahtes, das dem spitzen Ende gegenüberliegt, kann die elektrische Isolation über ein klassisches Verfahren hergestellt werden, wie etwa durch teilweises Eintauchen in eine Lösung mit geeigneten Polymermolekülen. Um eine mikrometerskalige Plattform bereitzustellen, könnte alternativ zu einer auf den Draht aufgesetzten Scheibe auch eine Art Sockel erzeugt werden, durch kontrolliertes Fräsen in die Drahtoberfläche, etwa per lonenstrahl (focused ion beam (FIB) milling) oder chemisches Ätzen.

Mit dem erfindungsgemäßen Verfahren ist, in gegenüber dem Stand der Technik verringerter Anzahl an Schritten, und insbesondere vereinfacht eine Messsonde zur Erfassung von Oberflächeneigenschaften oder zur Modifikation von Oberflächenstrukturen im sub-Mikrometerbereich zu bearbeiten und somit für eine spezielle Verwendung, z.B. der Erfassung von elektrischen, chemischen, oder (photo-) elektrochemischen und (photo-) katalytischen Eigenschaften von Oberflächen, verwendbar zu machen. Die erfindungsgemäßen Messsonden zeichnen sich dadurch durch kostengünstige Fertigung, Flexibilität und höhere Qualität in Bezug auf die Ausbildung der Spitze aus.

Neben der Reduktion von Arbeitsschritten und der damit verbundenen Zeitersparnis führt das erfindungsgemäße Verfahren zu einer höheren Qualität des Spitzen-Apex (Oberes Ende der Spitze), da es gegenüber den Verfahren im Stand der Technik, das dort erforderliche Freilegen, welches nicht rückstandsfrei erfolgt oder sogar zu einer ungewollten Modifikation des Spitzen-Apex sowie, gegebenenfalls, seiner leitfähigen Beschichtung führt, ersetzt ist durch ein nicht-invasives, schonendes Verfahren, bei dem der Apex (oberste)-Bereich der Spitze von der Beschichtung ausgespart bleibt.

Zudem bietet das erfindungsgemäße Verfahren die Möglichkeiten, die durch Polymerisation hergestellte Beschichtung durch Additive zu funktionalisieren und zusätzlich z.B. durch Erschaffung von Hohlräumen zu strukturieren, und somit eine breite Auswahl an kostengünstigen Messsonden mit hochwertigen Spitzen bereit zu stellen.

Auch eine Erhöhung des Durchsatzes, bei der Fertigung von Messsonden, ist mit dem erfindungsgemäßen Verfahren erreichbar, in dem mindestens zwei oder mehr Messsonden gleichzeitig prozessiert werden.

### Ausführungsbeispiele

Die Erfindung soll in 4 Ausführungsbeispielen und anhand von vier Figuren näher erläutert werden.

Die Figuren zeigen:
- Figur 1:: Schematische Darstellung einer nach dem erfindungsgemäßen Verfahren bearbeiteten Messsonde in Form eines Cantilevers, in schräger Aufsicht.
- Figur 2:: Schematische Darstellung einer nach dem erfindungsgemäßen Verfahren bearbeiteten Messsonde in Form eines Cantilevers mit Leiterbahn in schräger Aufsicht.
- Figur 3:: Schematische Darstellung einer nach dem erfindungsgemäßen Verfahren bearbeiteten Messsonde in Form eines Cantilevers, mit Leiterbahn und zusätzlichen leitfähigen Flächen in a) schräger Aufsicht auf die der Spitze gegenüberliegende Seite des Cantilevers und b) schräger Aufsicht auf die Spitzenseite des Cantilevers.
- Figur 4:: Schematische Darstellung einer nach dem erfindungsgemäßen Verfahren bearbeiteten Messsonde mit einer Spitze und einem Träger.

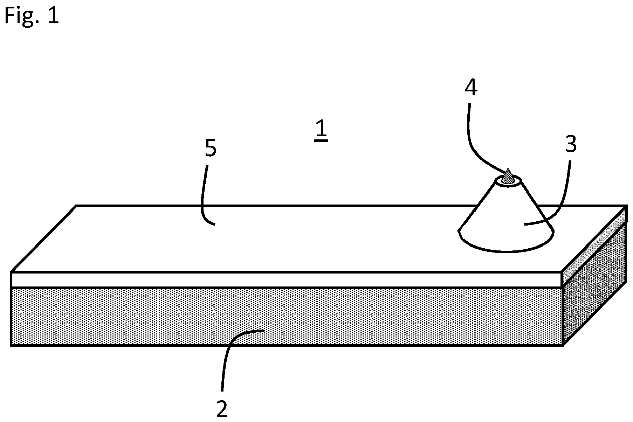

Die Fig. 1 zeigt schematisch ein erstes Ausführungsbeispiel für eine mit dem erfindungsgemäßen Verfahren bearbeitete Messsonde, hier in Form eines Cantilevers 1. Der Cantilever 1 besteht aus einem Federbalken 2 und einer Spitze 3, die im Ausführungsbeispiel aus dotiertem Silizium gefertigt sind, das einen spezifischen Widerstand in der Größenordnung von 10⁻² Ohm·cm aufweist. Der Federbalken 2 ist auf der Seite, an der auch die Spitze 3 angeordnet ist mit einem Polymer 5 mit einer Schichtdicke von 10 nm beschichtet. Die Beschichtung umfasst auch den unteren Teil der Spitze 3, aber nicht das obere Ende 4, sodass das obere Ende der Spitze 4 (der Scheitelpunkt, Apex) freiliegt. Das Polymer ist elektrisch nicht-leitend und weist einen spezifischen Widerstand von etwa 10⁸ Ω·cm oder höher auf. Das Polymer soll im Ausführungsbeispiel durch Zwei-Photonen-Polymerisation entsprechend dem erfindungsgemäßen Verfahren polymerisiert werden, ausgehend von einer Präkursor-Mischung basierend auf dem negativen Photoresist SU-8 (Microchem Co., Westborough, MA, USA) mit Beimengungen eines geeigneten Lösungsmittels zur Viskositätsanpassung sowie dem Photoinitiator Triarylsulfonium Salz gelöst in Propylen Carbonat. Ein erstes Ausführungsbeispiel für das erfindungsgemäße Verfahren ist wie folgt ausgeführt.

In dem ersten Ausführungsbeispiel ist die Beschichtung nach dem erfindungsgemäßen Verfahren auf einem Cantilever 1 ausgeführt, der aufgrund einer Pt-Beschichtung elektrisch leitfähig ist. Die Länge, Breite und Dicke des Federbalkens 2 betragen etwa 225, 27.5 und 3 Mikrometer. Die Höhe der pyramidalen Spitze beträgt 15 Mikrometer und der Krümmungsradius des Spitzen-Apex (oberes Ende der Spitze) ist laut Spezifikation 30 Nanometer.

Im Ausführungsbeispiel ist das erfindungsgemäße Verfahren als Zwei-Photonen Polymerisation (2PP) ausgeführt. Die Beschichtung des Cantilevers 1 erfolgt mittels eines sogenannten 3D-Druckers. Durch den 3D-Drucker sind eine Lichtquelle zur Emission von Lichststrahlen in Form eines Lasers gegeben und die Mittel zur veränderlichen Positionierung des Lichtstrahls bzw. Laserstrahls. Die Messsonde wird in dem 3D—Drucker in einem Fokus des Laserstrahls angeordnet. Im Ausführungsbeispiel wird der zu beschichtende Cantilever 1 mit einer flüssigen Präkursor-Mischung bedeckt, die bei Beleuchtung mit einem geeignet gepulsten Infrarot Laserstrahl im Bereich des Laserfokus polymerisiert und somit lokal von der flüssigen zur festen Phase, durch Polymerisation, übergeht. Typischerweise ist das vordere Ende des optischen Systems des Lasers, eine Linse, in die flüssige Präkursor-Mischung eingetaucht (Immersion), so dass sich ein Meniskus ausbildet zwischen der Linsenoberfläche des optischen Systems des Lasers und der flüssigen Präkursor-Mischung.

Ein 3D Modell der zu druckenden Struktur als Steuerdatei wird mittels einer elektronischen Datenverarbeitungsanlage erstellt und dann mit einer Software schichtweise dargestellt (Slicing). Jede Schicht wird wiederum linienweise aufgebaut (Hatching), um die Trajektorie des Laserfokus festzulegen, der entlang dieser Bahn die Struktur des zu bildenden Polymers systematisch von unten nach oben durch Polymerisation aufbaut. Dementsprechend startet der sogenannte Schreibprozess auf der spitzenseitigen Oberfläche des Cantilevers 1 und bewegt sich dann schichtweise entlang der Höhenachse der Spitze 3. Vor dem Schreibprozess wird der Cantilever 1 auf einem flachen Substrat (Probenhaltertisch) befestigt und die Oberflächenposition in Koordinaten mit Hilfe eines optischen Systems in die Steuerdatei eingelesen. Insbesondere im Bereich der Spitze 3 erfordert dies eine Genauigkeit im sub-Mikrometer Bereich. Die Slicing und Hatching Abstände sowie die Schreibgeschwindigkeit sind dabei so gewählt, dass die erforderliche Detailgenauigkeit erzielt wird, insbesondere im Bereich der feinsten Komponenten, also hier der Spitze 3. Die Slicing und Hatching Abstände betragen im Ausführungsbeispiel 100 nm und die Schreibgeschwindigkeit 1 mm/s. Wahlweise sind grössere Komponenten mit entsprechend grösseren Slicing und Hatching Abständen sowie einer höheren Geschwindigkeit zu schreiben, um die Gesamtschreibdauer auf ein realistisches Maß zu beschränken.

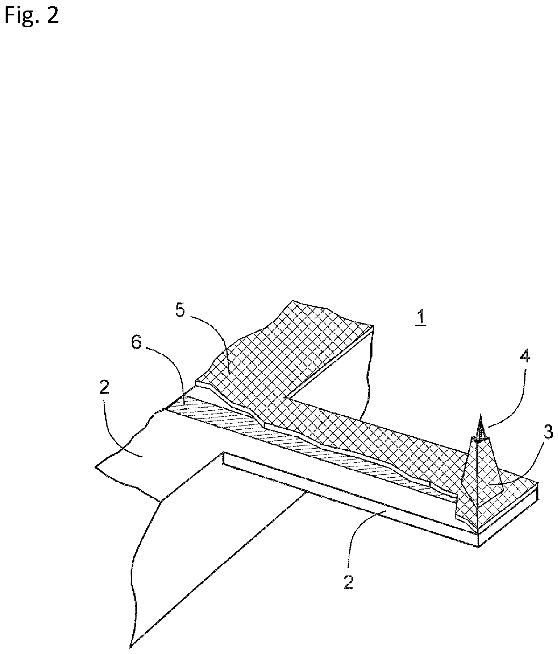

In der Fig 2 ist ein weiteres Ausführungsbeispiel einer erfindungsgemäßen Messsonde gezeigt. Die Messsonde besteht aus einem Cantilever 1 mit einer Leiterbahn (6) entlang seiner spitzenseitigen Oberfläche und der Oberfläche des Chips (2), der den Cantilever trägt. Die elektrisch isolierende Deckschicht (5) erstreckt sich über die gesamte spitzenseitige Cantilever-Oberfläche und die Mantelfläche der AFM Spitze, wobei eine relativ kleine Fläche um den Spitzenapex (4) ausgespart ist. Der Spitzenapex ist elektrisch mit der Leiterbahn (6) verbunden.

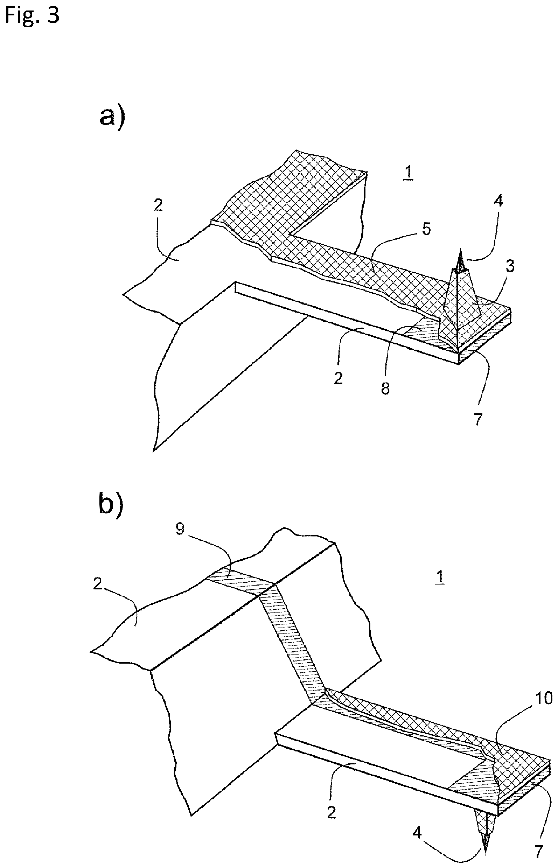

In der Fig. 3 ist ein drittes Ausführungsbeispiel für eine erfindungsgemäße Messsonde gezeigt. Die Messsonde besteht aus einem Cantilever 1 mit einer Leiterbahn (9) entlang der reflektorseitigen Oberfläche, der vorderen Kantenfläche (7), einer spitzenseitigen Fläche in der Umgebung der Spitze (8) sowie der gesamten Spitzenoberfläche. Die elektrisch isolierende Deckschicht (5) erstreckt sich über die gesamte Cantilever-Oberfäche und die Mantelfläche der Spitze, wobei eine relativ kleine Fläche um den Spitzenapex (4) ausgespart ist. Die elektrisch isolierende Deckschicht (10) erstreckt sich über die gesamte reflektorseitige Oberfläche des Cantilevers. Der Spitzenapex ist elektrisch verbunden über die leitfähigen Flächen (7) und (8) sowie über die Leiterbahn (9), die vom Cantilever aus weiter verläuft über den Chip (2), der den Cantilever trägt.

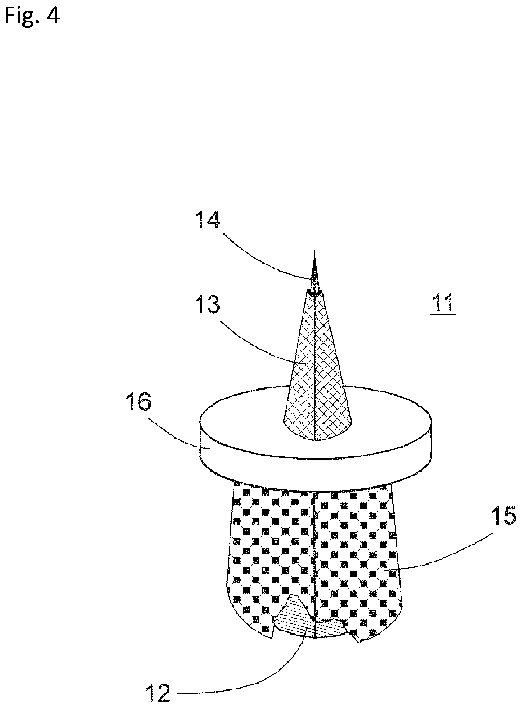

Eine viertes Ausführungsbeispiel zeigt die Fig. 4. Die erfindungsgemäße Messsonde besteht an einem vorderen Ende aus einer konischen Spitze (11), die bis auf den Bereich um den Apex (14) der Spitze mit elektrisch isolierender Beschichtung versehen ist. Im Bereich zwischen einer ring- oder scheibchenförmigen Plattform (16) soll die Beschichtung (13) mit dem erfindungsgemäßen Verfahren erzeugt werden, insbesondere um eine Bedeckung des Apex zu vermeiden. Im Bereich unterhalb der scheibchenförmigen Plattform soll die Beschichtung (15) auf der Drahtoberfläche (12) mittels eines klassischen Verfahrens erzeugt werden. Die Plattform selbst ist ebenfalls elektrisch isolierend. Diese könnte jedoch teilweise auch mit einem elektrisch isolierenden Polymer nach dem erfindungsgemäßen Verfahren beschichtet werden.

## Patentansprüche

1. Verfahren zur Bearbeitung einer Messsonde zur Erfassung von Oberflächeneigenschaften oder zur Modifikation von Oberflächenstrukturen im sub-Mikrometerbereich mindestens umfassend die Schritte
• Bereitstellen
■ eines Präkursors, welcher durch Licht- oder Elektronenstrahlen polymerisierbare Moleküle enthält;
■ einer Messsonde, welche mindestens einen Träger mit Spitze mit einem oberen Ende, welche dem Träger gegenüberliegt, umfasst;
■ einer Licht- oder Elektronenquelle zur Emittierung von Licht- oder Elektronenstrahlen mit einer Wellenlänge und Intensität, die einen mindestens erforderlichen Energieeintrag für eine Polymerisation des Präkursors erfüllen;
■ von Mitteln zur veränderlichen Positionierung der Licht- oder Elektronenquelle;
■ einer Steuerdatei und einer elektronischen Datenverarbeitungsanlage, wobei die Steuerdatei mindestens einen Teil der Oberfläche der Messsonde beschreibt und zur Steuerung einer Positionsänderung der Licht- oder Elektronenquelle dient;
• Bedeckung der Messsonde mit dem Präkursor und Anordnen der Messsonde im Strahlengang der Licht- oder Elektronenstrahlen;
• Belichtung des Präkursors- mit dem Licht- oder Elektronenstrahl an mehreren, in der Steuerdatei vorgegebenen, sich berührenden Positionen, unter Aussparung der Spitze der Messsonde und anschließend
• Entfernen der nicht belichteten Bereiche des Präkursors mittels Wasser-oder Lösungsmittelbad oder kontrolliertem Luft- oder Gasstrom.

2. Verfahren nach Anspruch 1, **dadurch gekennzeichnet, dass**
die Messsonde in Form eines Cantilevers, mindestens aufweisend eine Spitze und einen Federbalken, bereitgestellt wird.

3. Verfahren nach Anspruch 1,
**dadurch gekennzeichnet, dass**
die Spitze der Messsonde aus einem Draht gebildet ist und der Träger aus einer den Draht umfassenden Plattform.

4. Verfahren nach Anspruch 1,
**dadurch gekennzeichnet, dass**
die Spitze der bereitgestellten Messsonde mindestens an dem Ende, das dem Träger gegenüber liegt, leitfähig ist und die Messsonde zum Abgreifen von Strom oder Spannung, die an der Spitze anliegen, ausgerüstet ist.

5. Verfahren nach Anspruch 1,
**dadurch gekennzeichnet, dass**
der Präkursor in einer Mischung mit Additiven versetzt ist, wobei die Additive geeignet sind, einem Polymer mindestens eine der Eigenschaften elektrische Leitfähigkeit, magnetische Suszeptibilität, hohe mechanische Stabilität oder Steifigkeit, hohe thermische Stabilität oder optische Eigenschaften wie Transparenz und Reflektivität und katalytische Aktivität zu verleihen.

6. Verfahren nach Anspruch 4,
**dadurch gekennzeichnet, dass**
der leitfähige Teil der Spitze mindestens teilweise aus einem Material aus der Gruppe dotiertes Silizium, Aluminium, Gold, Iridium, Platin, Silber, Wolfram, Titannitrid, Wolframcarbid oder dotiertem Diamant gebildet ist.

7. Verfahren nach Anspruch 1,
**dadurch gekennzeichnet, dass**
der Präkursor als photopolymerisierbares Harz mindestens eins aus der Gruppe der Verbindungsklassen Acrylate, Epoxidharze, Fluorocarbone, Phenolharze, Amide, Ester, Imide, Styrol, (Poly-)Sulfide, Urethane, Vinyle, Silicone, Xylylene (incl. Parylene), UV-härtbare Dimethylsiloxane und Carbamate/Methacrylate enthält.

8. Verfahren nach Anspruch 1,
**dadurch gekennzeichnet, dass**
die Belichtung der Präkursor-Mischung mit einem Licht- oder Elektronenstrahl an mehreren, in der Steuerdatei vorgegebenen, sich berührenden Positionen, und unter Aussparung der Spitze der Messsonde erfolgt, wobei die in der Steuerdatei vorgegebenen Positionen teilweise in zusammenhängenden Bereichen von einer Oberfläche der Messsonde beabstandet sind.

9. Verfahren nach Anspruch 1,
**dadurch gekennzeichnet, dass**
eine Polymerisation des Präkursors mit einem Laserstrahl als Zwei-Photonen-Polymerisation erfolgt.

10. Messsonde zur Erfassung von Oberflächeneigenschaften oder zur Modifikation von Oberflächenstrukturen im sub-Mikrometerbereich, mindestens umfassend einen Träger und eine Spitze,
**dadurch gekennzeichnet, dass**
die Messsonde mindestens teilweise und unter Aussparung eines Teils der Spitze mit einem durch Licht- oder Elektronenstrahl polymerisierten Polymer beschichtet ist.

11. Messsonde nach Anspruch 10,
**dadurch gekennzeichnet, dass**
die Messsonde als Cantilever gegeben ist und der Cantilever als Mittel zum Abgreifen von Strom oder Spannung mit einer Leiterbahn versehen ist, deren Breite kleiner ist als die Gesamtbreite des Federbalkens des Cantilevers.

12. Messsonde nach Anspruch 11,
**dadurch gekennzeichnet, dass**
lediglich die spitzenseitige Oberfläche des Cantilevers, unter Aussparung des oberen Endes der Spitze, beschichtet ist, wobei Kantenflächen des Cantilevers unbeschichtet sind.

13. Messsonde nach Anspruch 10,
**dadurch gekennzeichnet, dass**
die Messsonde mit mindestens einer Leiterbahn versehen ist, welche aus einem elektrisch leitfähigen Polymer gebildet ist und wobei das elektrisch leitfähige Polymer aus einem durch Licht- oder Elektronenstrahlen polymerisierten Präkursor gebildet ist, dem elektrisch leitfähige Additive zugesetzt sind.

14. Messsonde nach Anspruch 10,
**dadurch gekennzeichnet, dass**
die Messsonde mindestens auf der spitzenseitigen Oberfläche mit einem elektrisch leitfähigen Polymer beschichtet ist, und wobei das elektrisch leitfähige Polymer aus einem durch Licht- oder Elektronenstrahlen polymerisierten Präkursor gebildet ist, dem elektrisch leitfähige Additive zugesetzt sind und diese leitfähige Schicht wiederum mindestens teilweise und unter Aussparung eines Teils der Spitze mit einem durch Licht- oder Elektronenstrahl polymerisierten Polymer beschichtet ist.

15. Messsonde nach Anspruch 10,
**dadurch gekennzeichnet, dass**
die Spitze aus einem Draht gebildet ist und der Träger aus einer den Draht umfassenden Plattform.
